# EUROPÄISCHE PATENTSCHRIFT

(11) **EP 1 369 269 B1**
(45) Veröffentlichungstag und Bekanntmachung des Hinweises auf die Patenterteilung: **10.08.2011**
(21) Anmeldenummer: 03012518.1
(22) Anmeldetag: 02.06.2003
(51) Int. Cl.: B60H 1/00

(54) **Vorrichtung zur Steuerung eines Luftstroms, insbesondere für eine Heizungs- oder Klimaanlage von Kraftfahrzeugen**
Device for controlling an air stream, in particular for a heating or air-conditioning system in motor vehicles
Dispositif pour contrôler un courant d'air, notamment pour une installation de chauffage ou climatisation des véhicules automobiles

(30) Priorität: 05.06.2002 DE 10225109
(43) Veröffentlichungstag der Anmeldung: 10.12.2003
(73) Patentinhaber: Behr GmbH & Co. KG, 70469 Stuttgart (DE)
(72) Erfinder: Klingler, Dietrich, Dipl.-Ing., 73540 Heubach (DE); Schwahn, Werner, 71701 Schwieberdingen (DE); Otto, Jürgen, Dipl.-Ing., 75428 Illingen (DE)
(74) Vertreter: Grauel, Andreas

(56) Entgegenhaltungen:
- EP-A- 1 346 859
- US-A- 5 154 223
- US-A- 5 934 361
- PATENT ABSTRACTS OF JAPAN Bd. 012, Nr. 432 (M-763), 15. November 1988 (1988-11-15) -& JP 63 166618 A (NIPPON DENSO CO LTD), 9. Juli 1988 (1988-07-09)

## Beschreibung

Die Erfindung betrifft eine Vorrichtung zur Steuerung eines Luftstroms, insbesondere für eine Heizungs- oder Klimaanlage von Kraftfahrzeugen, gemäß dem Oberbegriff des Anspruchs 1.

Bei derartige Anlagen ist es erforderlich, mindestens eine Steuervorrichtung zur Steuerung eines Luftstroms durch eine Luftdurchlassöffnung vorzusehen. Bei diesem Luftstrom kann es sich je nach Anwendungsfall um Kaltluft, Warmluft oder klimatisierte Luft handeln. Die Luftdurchlassöffnung kann insbesondere durch einen Kanal, eine Luftauslassdüse usw. begrenzt werden.

Im allgemeinen werden als Steuervorrichtungen schwenkbare Klappen verwendet, die entweder von Hand oder über ein Antriebsorgan drehend verstellt werden können. Der Hauptnachteil dieser Klappenvorrichtungen besteht darin, dass sie einen großen Bewegungsraum erfordern, wodurch sich der Bauraumbedarf der Heizungs- oder Klimaanlage entsprechend vergrößert. Ferner sind die durch die Bewegung der Klappen verursachten Geräusche unerwünscht.

Zur Lösung dieses Problems sind Steuervorrichtungen mit einem Band bekannt, welches auf zwei zueinander beabstandete Rollen aufgewickelt ist, wobei dieses Band quer zur Luftdurchlassöffnung angeordnet ist und offene und geschlossene Bereiche enthält, um den Luftstrom wahlweise in Abhängigkeit von der Position des Bandes zu steuern. Eine derartige Vorrichtung zur Steuerung eines Luftstroms ist in Form einer unabhängigen Einheit, die ein Traggestell umfasst, an dem zwei Rollen drehend gelagert sind, auf die ein Band aufgewickelt wird, das offene und geschlossene Bereiche enthält, um wahlweise einen Luftstrom zu steuern, der durch ein Fenster des Traggestells hindurchgeht, wenn die Vorrichtung quer zu einer Durchlassöffnung für den Luftstrom angeordnet ist, aus der DE 197 11 209 A1 bekannt.

Ferner ist aus der US 5,901,943 bekannt, dass das Band die zwei oder mehr Rollen auch in Form eines endlosen Bandes umschließen kann.

Die JP 63 166 618 zeigt eine Vorrichtung gemäß Oberbegriff des Anspruchs 1.

Derartige Vorrichtungen lassen jedoch noch Wünsche offen.

Es ist Aufgabe der Erfindung, eine vorgenannte Vorrichtung zur Steuerung eines Luftstromes zu verbessern.

Diese Aufgabe wird gelöst durch eine Vorrichtung zur Steuerung eines Luftstroms, insbesondere für eine Heizungs- oder Klimaanlage von Kraftfahrzeugen, mit den Merkmalen des Anspruchs 1. Vorteilhafte Ausgestaltungen sind Gegenstand der Unteransprüche.

Erfindungsgemäß ist eine Vorrichtung zur Steuerung eines Luftstroms mit einem Band vorgesehen, wobei das Band zwischen mindestens zwei Rollen derart geführt ist, dass es bereichsweise doppelt angeordnet ist, d.h. der Vor- und Rücklauf des Bandes übereinander liegend angeordnet sind.

Vorzugsweise weist das Band Öffnungen, z.B. großflächige Öffnungen oder aber auch Perforationen, aufweist, wobei es sich vorzugsweise um zwei Öffnungen je Band handelt, die - bei entsprechender Positionierung des Bandes - im Bereich der doppelten Anordnung vorgesehen sind, welche zusammen eine Öffnung bilden, durch die Luft strömen kann.

Das Band kann dabei als normales Band ausgebildet sein, wobei es mit einem beiden Enden mit je einer Rolle verbunden ist, oder aber gemäß einer alternativen Ausführungsform als ein endloses Band ausgebildet sein, welches um verschiedene Rollen läuft, unter anderem eine Antriebsrolle.

Im folgenden wird die Erfindung anhand zweier Ausführungsbeispiele mit Varianten unter Bezugnahme auf die Zeichnung im einzelnen erläutert. In der Zeichnung zeigen:
- Fig. 1: ein Gehäuse zur Steuerung eines Heizkörper-Luftstroms gemäß dem ersten Ausführungsbeispiel;
- Fig. 2: das Gehäuse von Fig. 1 mit abgenommener Abdeckung;
- Fig. 3: das Gehäuse von Fig. 1 mit abgenommener Abdeckung aus einer anderen Perspektive;
- Fig. 4: eine Darstellung verschiedener Bandstellungen;
- Fig. 5a bis c: Seitenansichten verschiedener Varianten von Rollenanordnungen;
- Fig. 6: ein Anwendungsbeispiel;
- Fig. 7: ein Gehäuse zur Steuerung eines Verdampfer-Luftstroms gemäß dem zweiten Ausführungsbeispiel;
- Fig. 8: das Gehäuse von Fig. 7 aus einer anderen Perspektive;
- Fig. 9: eine Seitenansicht; und
- Fig. 10: eine Ansicht des Stellantriebs.

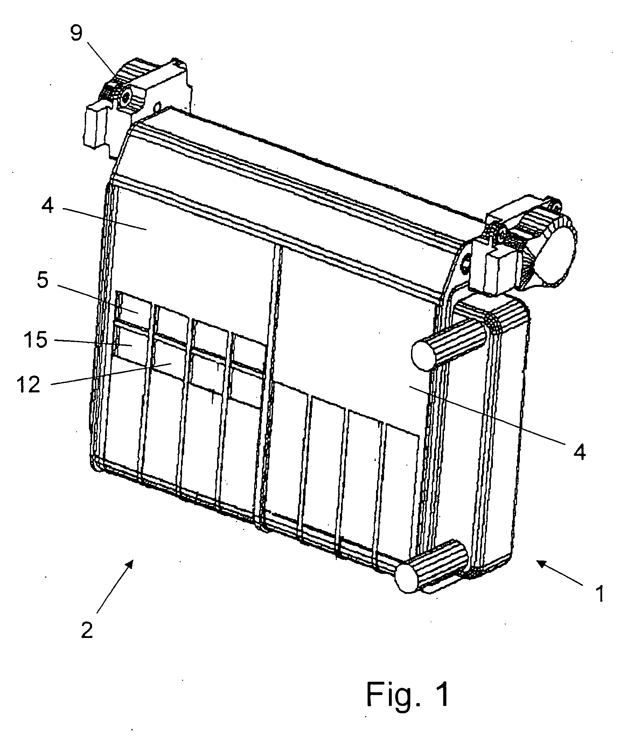

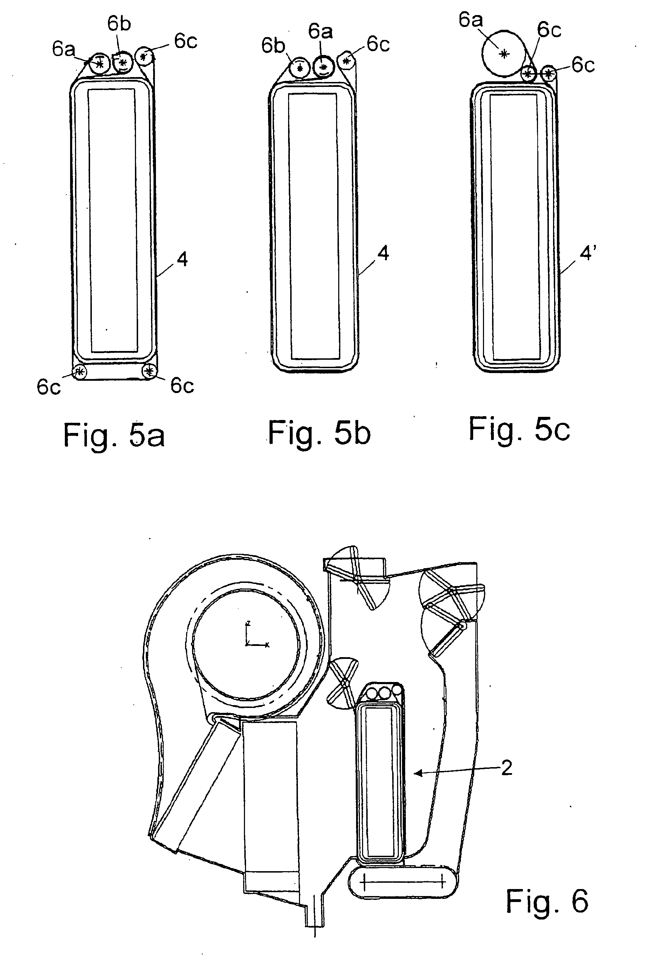

Fig. 1 zeigt einen von einem Luftstrom durchströmbaren Heizkörper 1. Der Luftstrom ist mittels einer Vorrichtung 2 zur Steuerung des Luftstroms steuerbar. Die Vorrichtung 2 weist einen Träger 3 auf. Ferner weist die Vorrichtung 2 gemäß dem ersten Ausführungsbeispiel zwei Bänder 4 mit-Öffnungen 5 auf, die um Rollen 6, nämlich einer Antriebsrolle 6a, einer Aufwickelrolle 6b und drei Umlenkrollen 6c (vgl. Fig. 5a), gewickelt oder geschlungen sind. Die Antriebsrolle 6a wird von einem Stellantrieb 9 angetrieben, welcher ebenfalls Teil der Vorrichtung 2 ist und bei Bedarf bspw. von einem nicht in der Zeichnung dargestellten Elektromotor angetriebenwird. Die Umlenkrollen 6c dienen im wesentlichen der Umlenkung der Bänder 4 sowie zur Positionierung der Bänder 4 und der Verringerung der Reibung. Hierbei sind die drei Umlenkrollen 6c an jeweils einer Ecke des Heizkörpers 1 angeordnet, an oder im Bereich der vierten Ecke befinden sich die Antriebsrolle 6a und die Aufwickelrolle 6b. Es kann jedoch auch auf Umlenkrollen 6c in so weit verzichtet werden, als dass andere Bauteile deren Funktion übernehmen (siehe z.B. Fig. 5b).

Die Vorrichtung 2 ist am Heizkörper 1 angebracht und wird teilweise mittels einer Abdeckung 10 abgedeckt. Dabei weist die Abdeckung Fenster 11 auf, welche Öffnungen für den Luftstrom bilden. Entsprechende Fenster 12 sind im Träger 3 vorgesehen, sind aber durch die Bänder 4 verschlossen. Hierbei sind die Bänder 4 derart geführt, dass sie im Bereich der Fenster 12 doppelt angeordnet sind, wobei der Vorlauf und der Rücklauf direkt benachbart zueinander angeordnet sind.

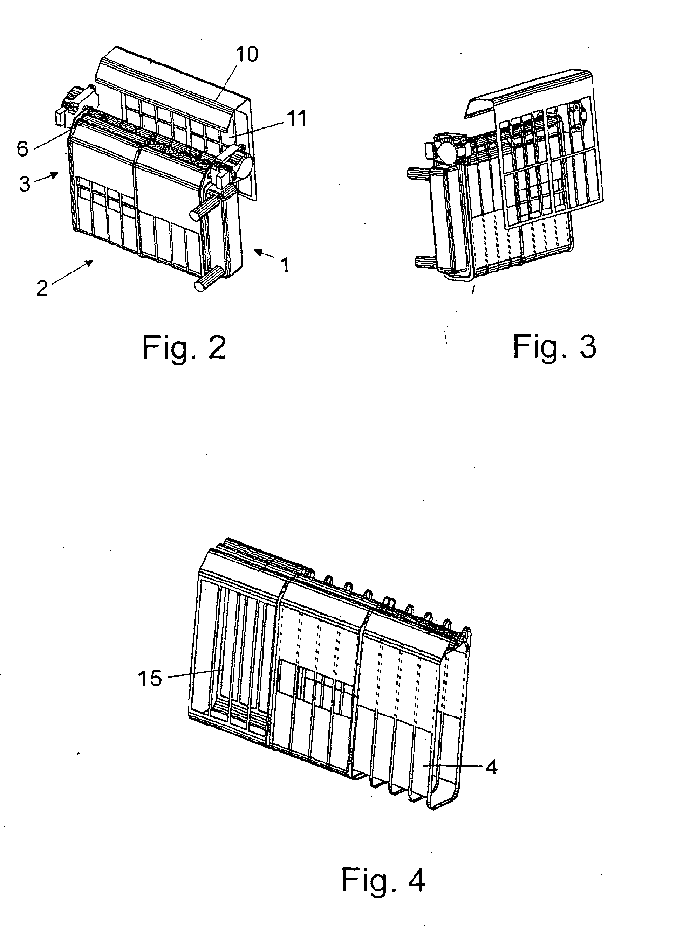

Die Öffnungen 5 der Bänder 4 sind derart positioniert, dass sie im Falle eines vollständigen Verschließens, d.h. wenn kein Luftstrom durch den Heizkörper 1 strömen soll, jeweils in einem Teil des jeweiligen Bandes 4 angeordnet sind, in dem im anderen, parallel geführten Teil des entsprechenden Bandes 4 keine Öffnungen 5 vorgesehen sind. Soll ein Luftstrom den Heizkörper 1 durchströmen, so wird ein - oder bei Bedarf - beide Bänder 4 mit Hilfe des Stellantriebs 9 so bewegt, dass - von der Mitte ausgehend - eine Öffnung 15 sich öffnet, durch die der Luftstrom strömen kann. In diesem Zusammenhang sei auch auf Fig. 4 hingewiesen, gemäß der im Gegensatz zum hier beschriebenen Ausführungsbeispiel drei Bänder 4 vorgesehen sind, wobei das rechte Band 4 in Fig. 4 den Durchlass verschließt, das mittlere Band 4 den Durchlass teilweise freigibt und das linke Band 4 den Durchlass vollständig freigibt.

Gemäß einer in Fig. 5c dargestellten Variante handelt es sich bei den Bändern 4 um geschlossene, d.h. endlose Bänder 4', so dass auf eine Aufwikkelrolle 6b verzichtet werden kann und lediglich eine Antriebsrolle 6a sowie mindestens eine Umlenkrolle 6c erforderlich ist.

Fig. 6 zeigt einen Anwendungsfall für die Vorrichtung 2 zur Steuerung des Luftstroms. In diesem Fall ersetzt die Vorrichtung 2 die Klappe für die Restaufwärmung und verhindert oder minimiert infolge des nahezu vollständigen Umschließens des Heizkörpers 1 durch die Bänder 4 die Restaufwärmung der sich in diesem Bereich befindlichen Luft.

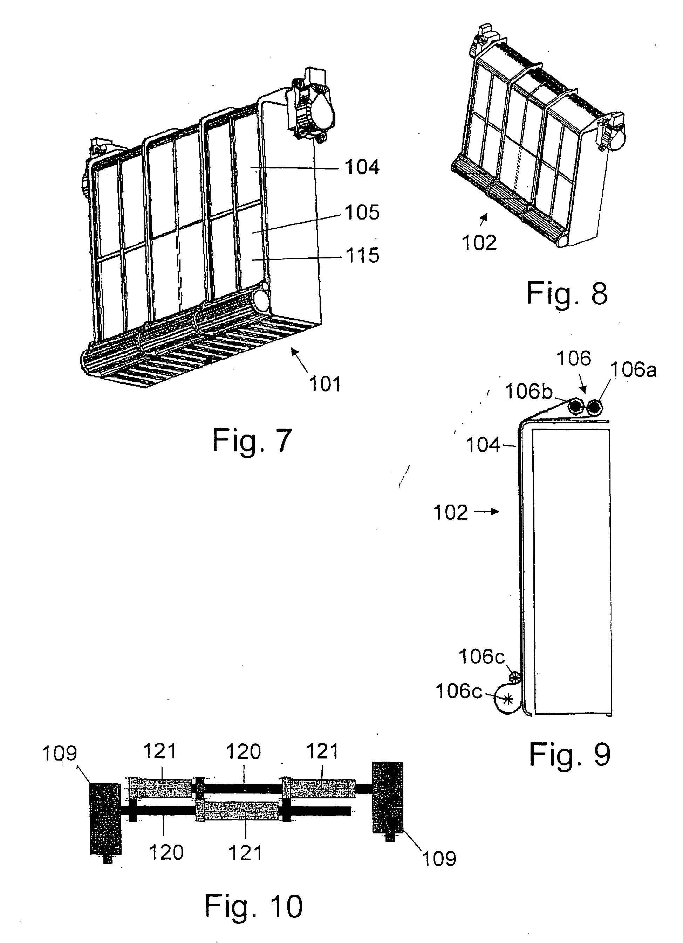

Beim in den Figuren 7 bis 10 dargestellten zweiten Ausführungsbeispiel handelt es sich um einen Verdampfer 101, der - entsprechend dem Heizkörper 1 gemäß dem ersten Ausführungsbeispiel - von einem Luftstrom durchströmt werden kann, wobei der Luftstrom mittels einer Vorrichtung 102 zur Steuerung des Luftstroms steuerbar ist.

Die Vorrichtung 102 weist drei Bänder 104 auf, welche um Rollen 106, d.h. ausgehend von Antriebsrollen 106a über große Umlenkrollen 106c, kleine Umlenkrollen 106c zu getriebenen Rollen, d.h. Aufwickelrollen 106b geführt werden.

Die Antriebsrollen 106a werden mittels zweier Stellantriebe 109 gesteuert angetrieben, so dass die Bänder 104, welche entsprechend den Bändern 4 mit Öffnungen 105 versehen sind, je nach Bedarf positioniert werden und die Öffnungen 105 ggf. Öffnungen 115 bilden, durch die Luft strömen kann. Hierbei ist ein Stellantrieb 109 für die beiden äußeren Bänder 104 und ein zweiter, auf der gegenüberliegenden Seite angeordneter Stellantrieb 109 für das mittlere Band 104 zuständig. Jeder Stellantrieb 109 weist eine Antriebswelle 120, welche die Antriebsrolle 106a, sowie eine bzw. zwei auf dieser Antriebswelle 120 angeordnete Hohlwellen 121 auf, welche die.Aufwickelrollen 106b bilden (vgl. Fig. 10). Die Bänder 104 sind mit jeweils einer Antriebswelle 120, d.h. mit einer Antriebsrolle 106a verbünden, in ein Trägergehäuse montiert und verclipst.

Die Funktion der Vorrichtung 102 zur Steuerung des Luftstroms ist dieselbe wie die der Vorrichtung 2 zur Steuerung des Luftstroms gemäß dem ersten Ausführungsbeispiel.

### Bezugszeichenliste

- 1: Heizkörper
- 2, 102: Vorrichtung
- 3: Träger
- 4, 4', 104: Band
- 5, 105: Öffnung
- 6, 106: Rolle
- 6a, 106a: Antriebsrolle
- 6b, 106b: Aufwickelrolle
- 6c, 106c: Umlenkrolle
- 9, 109: Stellantrieb
- 10: Abdeckung
- 11: Fenster
- 12: Fenster
- 15, 115: Öffnung
- 101: Verdampfer
- 120: Antriebswelle
- 121: Hohlwelle

## Patentansprüche

1. Vorrichtung zur Steuerung eines Luftstroms, insbesondere für eine Heizungs- oder Klimaanlage von Kraftfahrzeugen, mit einem Band (4; 4'; 104), welches mittels mindestens zwei zueinander beabstandeten Rollen (6; 106) gespannt gehalten wird und zwischen diesen Rollen zumindest einmal umgelenkt ist, **dadurch gekennzeichnet, dass** das Band (4; 4'; 104) zwischen mindestens zwei der Rollen (6; 106) doppelt angeordnet geführt ist, so dass der Vorlauf und der Rücklauf des Bandes (4; 4'; 104) in diesem Bereich übereinander liegend angeordnet sind.

2. Vorrichtung zur Steuerung eines Luftstroms nach Anspruch 1, **dadurch gekennzeichnet, dass** das Band (4; 4'; 104) Öffnungen (5; 105) aufweist.

3. Vorrichtung zur Steuerung eines Luftstroms nach Anspruch 2, **dadurch gekennzeichnet, dass** das Band (4; 4'; 104) mindestens zwei Öffnungen (5; 105) aufweist.

4. Vorrichtung zur Steuerung eines Luftstroms nach Anspruch 2 oder 3, **dadurch gekennzeichnet, dass** die Öffnungen (5; 105) im Bereich der doppelten Anordnung vorgesehen sind.

5. Vorrichtung zur Steuerung eines Luftstroms nach Anspruch 4, **dadurch gekennzeichnet, dass** die Öffnungen (5; 105) im Bereich der doppelten Anordnung derart vorgesehen sind, dass sich aus einer Öffnung (5; 105) im Vorlauf des Bandes (4; 4'; 104) und einer Öffnung (5; 105) im Rücklauf des Bandes (4; 4'; 104) eine Öffnung (15; 115) bildet.

6. Vorrichtung zur Steuerung eines Luftstroms nach Anspruch 5, **dadurch gekennzeichnet, dass** die durch das doppelt angeordnete Band (4; 4'; 104) bildende Öffnung (15; 115) im mittleren Bereich zwischen den zwei das Band (4; 4'; 104) spannenden Rollen (6; 106) angeordnet ist und sich von der Mitte her öffnet.

7. Vorrichtung zur Steuerung eines Luftstroms nach einem der vorstehenden Ansprüche, **dadurch gekennzeichnet, dass** das Band (4; 4'; 104) als ein endloses Band (4') ausgebildet ist.

8. Heizungs- oder Klimaanlage von Kraftfahrzeugen mit einem Heizkörper (1) und/oder einem Verdampfer (101) oder einem anderen Kühlkörper **dadurch gekennzeichnet, dass** die Heizungs- oder Klimaanlage eine Vorrichtung zur Steuerung eines Luftstroms nach einem der vorstehenden Ansprüche aufweist.

9. Heizungs- oder Klimaanlage nach Anspruch 8, **dadurch gekennzeichnet, dass** das Band (4; 4') um einen Heizkörper (1) angeordnet ist.

10. Heizungs- oder Klimaanlage nach Anspruch 8 oder 9, **dadurch gekennzeichnet, dass** das Band (4; 4') den Heizkörper (1) zumindest an drei Seiten umschließt.

11. Heizungs- oder Klimaanlage nach einem der Ansprüche 8 bis 10, **dadurch gekennzeichnet, dass** das Band (104) an einem Verdampfer (101) oder an einem anderen Kühlkörper angeordnet ist.

## Claims

1. A device for controlling an air stream, in particular for a heating or air conditioning system in motor vehicles, comprising a strip (4; 4'; 104) which is held taut using at least two interspaced rollers (6; 106), and is redirected between said rollers at least once,
**characterized in that** the strip (4; 4'; 104) is routed such that it is doubled between at least two of the rollers (6; 106), and therefore the forward extension and the return extension of the strip (4; 4'; 104) are arranged one over the other in said region.

2. The device for controlling an air stream according to claim 1, **characterized in that** the strip (4; 4'; 104) comprises openings (5; 105).

3. The device for controlling an air stream according to claim 2, **characterized in that** the strip (4; 4'; 104) comprises at least two openings (5; 105).

4. The device for controlling an air stream according to claim 2 or 3, **characterized in that** the openings (5; 105) are provided in the region of the doubled arrangement.

5. The device for controlling an air stream according to claim 4, **characterized in that** the openings (5; 105) in the region of the doubled arrangement are situated such that an opening (15; 115) is formed of one opening (5; 105) in the forward extension of the strip (4; 4'; 104) and one opening (5; 105) in the return extension of the strip (4; 4'; 104).

6. The device for controlling an air stream according to claim 5, **characterized in that** the opening (15; 115) formed by the doubly arranged strip (4; 4'; 104) is disposed in the central region between the two rollers (6; 106) which tension the strip (4; 4'; 104), and opens from the center.

7. The device for controlling an air stream according to one of the preceding claims, **characterized in that** the strip (4; 4'; 104) is designed as an endless strip (4').

8. A heating or air-conditioning system in motor vehicles, comprising a heater core (1) and/or an evaporator (101) or another cooling body, **characterized in that** the heating or air-conditioning system comprises a device for controlling an air stream according to one of the preceding claims.

9. The heating or air-conditioning system according to claim 8, **characterized in that** the strip (4; 4') is disposed around a heater core (1).

10. The heating or air-conditioning system according to claim 8 or 9, **characterized in that** the strip (4; 4') encloses the heater core (1) on at least three sides.

11. The heating or air-conditioning system according to of the claims 8 to 10, **characterized in that** the strip (104) is disposed in an evaporator (101) or another cooling body.

## Revendications

1. Dispositif de régulation d'un flux d'air, en particulier pour un système de chauffage ou de climatisation de véhicules automobiles, comprenant une bande (4 ; 4'; 104) qui est maintenue tendue au moyen d'au moins deux rouleaux (6 ; 106) espacés l'un de l'autre et est redirigée au moins une fois entre ces rouleaux, **caractérisé en ce que** la bande (4; 4'; 104) est guidée en étant disposée en double entre au moins deux des rouleaux (6 ; 106), de sorte que les mouvements en avant et en arrière de la bande (4; 4'; 104) sont agencés en se produisant l'un au-dessus de l'autre dans cette zone.

2. Dispositif de régulation d'un flux d'air selon la revendication 1, **caractérisé en ce que** la bande (4; 4'; 104) présente des ouvertures (5; 105).

3. Dispositif de régulation d'un flux d'air selon la revendication 2, **caractérisé en ce que** la bande (4; 4'; 104) présente au moins deux ouvertures (5; 105).

4. Dispositif de régulation d'un flux d'air selon la revendication 2 ou 3, **caractérisé en ce que** les ouvertures (5 ; 105) sont prévues dans la zone de l'agencement en double.

5. Dispositif de régulation d'un flux d'air selon la revendication 4, **caractérisé en ce que** les ouvertures (5; 105) sont prévues dans la zone de l'agencement en double, de manière telle qu'une ouverture (15; 115) se forme à partir d'une ouverture (5 ; 105) au cours du mouvement en avant de la bande (4 ; 4' ; 104) et à partir d'une ouverture (5 ; 105) au cours du mouvement en arrière de la bande (4 ; 4' ; 104).

6. Dispositif de régulation d'un flux d'air selon la revendication 5, **caractérisé en ce que** l'ouverture (15 ; 115) se formant par la bande (4 ; 4' ; 104) agencée en double est disposée, dans la zone centrale, entre les deux rouleaux (6 ; 106) tendant la bande (4 ; 4' ; 104) et s'ouvre à partir du milieu.

7. Dispositif de régulation d'un flux d'air selon l'une quelconque des revendications précédentes, **caractérisé en ce que** la bande (4 ; 4'; 104) est configurée comme une bande sans fin (4').

8. Système de chauffage ou de climatisation de véhicules automobiles, comprenant un radiateur (1) et / ou un évaporateur (101) ou un autre refroidisseur, **caractérisé en ce que** le système de chauffage ou de climatisation présente un dispositif de régulation d'un flux d'agir selon l'une quelconque des revendications précédentes.

9. Système de chauffage ou de climatisation selon la revendication 8, **caractérisé en ce que** la bande (4 ; 4') est disposée autour d'un radiateur (1).

10. Système de chauffage ou de climatisation selon la revendication 8 ou 9, **caractérisé en ce que** la bande (4 ; 4') entoure le radiateur (1) au moins sur trois côtés.

11. Système de chauffage ou de climatisation selon l'une quelconque des revendications 8 à 10, **caractérisé en ce que** la bande (104) est disposée sur un évaporateur (101) ou sur un autre refroidisseur.
